# EUROPÄISCHE PATENTANMELDUNG

(11) **EP 0 890 302 A1**
(43) Veröffentlichungstag der Anmeldung: **13.01.1999**
(21) Anmeldenummer: 98111944.9
(22) Anmeldetag: 27.06.1998
(51) Int. Cl.: A01G 3/053

(54) **Heckenschere**

(30) Priorität: 11.07.1997 DE 19729735; 18.06.1998 DE 19827107
(71) Anmelder: SCINTILLA AG, CH-4501 Solothurn (CH)
(72) Erfinder: Schaer, Alfred, 2542 Pieterlein (CH)
(74) Vertreter: Wierspecker, Horst

(57) **Zusammenfassung**

Motorgetriebene Heckenschere (10) mit einem Maschinengehäuse (12), das einen Haupthandgriff (14) mit Schalttaste (16) sowie einen, insbesondere U- bzw. C-förmigen, hohlen Zusatzhandgriff (22) trägt, in dessen Innerem ein Seilzug (42) über ein vom Zusatzhandgriff (22) getragenes in dessen Inneres greifendes Tastenelement (26) auslenkbar auf einen Ein-/Ausschalter wirkend angeordnet ist, wird dadurch kostengünstiger herstellbar, robuster und einfacher handhabbar, daß der Zusatzhandgriff (22) nur ein einziges Tastenelement (26) trägt, das gegenüber dem Zusatzhandgriff (22) in alle Richtungen im Bereich von dessen Mittelelebene bewegbar angeordnet ist und dabei den Seilzug (42) betätigend gegenüber dem Schalter mitnimmt, wobei der Seilzug (42) nur längsauslenkbar mit dem Tastenelement (22) gekoppelt ist.

## Beschreibung

### Stand der Technik

Die Erfindung betrifft eine Heckenschere nach dem Oberbegriff des Anspruchs 1.

Es sind unterschiedliche Heckenscheren mit Zusatzhandgriff bekannt, die zur Sicherheit des Bedienenden nur dann ingangsetzbar und inganghaltbar sind, wenn sowohl der Ein-Schalter am Haupthandgriff als auch eine zusätzliche Schalterbetätigungstaste im Zusatzhandgriff niedergedrückt bleiben.

Wird eine der Schalterbetätigungen losgelassen, stoppt die Maschine unverzüglich, damit vermieden wird, daß mit der Heckenschere mit nur einer Hand - mit entsprechenden Gefahren verbunden - gearbeitet wird.

Aus EP-A-0 214 455 ist eine Heckenschere bekannt, die einen C-förmigen Zusatzhandgriff trägt, dessen beide U-Schenkel sowie der Steg je eine Bedientaste tragen. Damit sind die Tasten in allen Griffpositionen der den Zusatzhandgriff haltenden Hand einfach und gut zugänglich niederdrückbar. Jede Bedientaste wirkt unabhängig von der anderen auf einen einzigen in Inneren des hohlen Zusatzhandgriffs gespannt angeordheten Seilzug, wobei dieser quer zu seiner Längsachse ausgelenkt wird und wobei infolge der Querauslenkung seine Enden sich längs zu verschieben suchen. Da das eine Ende des Seilzugs fest im Inneren des Zusatzhandgriffs angelenkt ist und das andere Ende verschieblich an einem Betätigungselement des Totmannschalters, wird bei der Querauslenkung des Seilzugs, gleich von welcher Bedientaste aus, das bewegliche Seilzugende gemeinsam mit dem Betätigungselement verschoben, wobei der Totmannnschalter den Betriebsstromkereis zum Antrieb der Heckenschere schließt.

Die bekannte Heckenschere besteht aus vielen unterschiedlichen Einzelteilen, weil der Seilzug im Inneren des C-förmigen Zusatzhandgriffs über dessen gesamte Länge der C-Form folgend geführt und über drei an jedem C-Schenkel gelagerte Bedientasten unabhängig voneinander betätigbar ist. Daher ist die bekannte Heckenschere verhältnismäßig aufwendig herzustellen.

### Vorteile der Erfindung

Die erfindungsgemäße Heckenschere mit den kennzeichnenden Merkmalen des Anspruchs 1 ist wegen der geringen Anzahl von Teilen und des einfachen Aufbaus des Zusatzhandgriffs einfach und kostengünstig herstellbar, wobei die Schalterbetätigung des Totmannschalters besonders robust ist.

Außerdem ist die Betätigungskraft am Zusatzhandgriff zur Schalterbetätigung bei beliebigen Griffpositionen besonders gering und die Bedientaste in jeder Betätigungsrichtung leichtgängig und bequem handhabbar.

Dadurch, daß nur ein einziges Tastenelement am Zusatzhandgriff zu jedem C-Schenkel hin beweglich gelagert ist, ist der Zusatzhandgriff mit größeren Toleranzen und geringen Teile-Mengen herstellbar.

Dadurch, daß der Seilzug besonders kurz ist, kürzer als die Schenkellänge des U-Schenkels, ist er besonders leicht im Zusatzhandgriff unterzubringen und einfach montierbar.

Dadurch, daß der Seilzug trotz Querverschiebung längsbetätigt bleibt, ist er geringerer Beanspruchungen bzw. geringerer Materialermüdung ausgesetzt.

Durch die Anordnung des Seilzuges zwischen Auflagepunkten des Tastenelements und Führen über einen zwischen den Auflagepunkten befindlichen ortsfesten Vorsprung des Zusatzgriffs ist eine Querverschiebung des Seilzugs bei Längsbetätigung in zwei Richtungen möglich.

Da der Seilzug an beiden Enden Schlingen trägt, ist er besonders leicht zwischen dem Schalterbetätiger und dem Tastenelement befestigbar.

Dadurch, daß der Teil des Tastenelements, der dem das Ende des Seilzugs tragenden Teil gegenüberliegt, eine Führungsschräge insbesondere Führungskurve für den Seilzug bildet, ist der Seilzug großflächig aufliegend sicher geführt und verschleißarm gelagert.

Dadurch, daß der Seilzug sinusförmig verlegt ist, ist er besonders leicht gespannt zu halten, so daß beim Betätigen des Tastenelements ein sehr direktes Ansprechen des Schalters erreicht wird.

Dadurch, daß der Seilzug zwischen der Führungsschräge des Tastenelements und der Befestigung am Anhängestift der drehbar gelagerten, sich am Stößel abstützenden Kurvenscheibe geführt wird, ist bei Beanspruchung des Seilzugs längs zu seiner Achse dessen Verschleiß besonders niedrig.

Dadurch, daß das Tastenelement durch eine Feder im Inneren des Zusatzhandgriffs gespannt gehalten wird, ist dessen bequeme Bedienbarkeit und Lagesicherung gewährleistet.

Dadurch, daß das Tastenelement etwa am Ende seiner U-Schenkel einen diese verbindenden Quersteg aufweist, ist es besonders formsteif bzw. verformungssicher, was bei Betätigung ein sehr direktes Ansprechen des Schalters gewährleistet.

Dadurch, daß das Tastenelement mit Ausnehmungen an mindestens jedem Ende der U-Schenkel je einen ortsfesten Nocken des Zusatzhandgriffs umgreift, ist der Betätigungsweg des Tastenelements über seinen vorgesehenen Betätigungshub in allen Betätigungsrichtungen bestimmt bzw. begrenzt und das Tastenelement ist gegen Herausfallen aus dem Zusatzhandgriff gesichert.

Dadurch, daß das Tastenelement ein mit vielen inneren Rippen versehener Hohlkörper ist, ist es besonders leicht, biegesteif und daher bedienungsfreundlich.

Durch zentrierte Abstützung des Tastenelements im Bereich seines am oberen Schenkel mittigen warzenartigen Zentrierdoms gegenüber dem Zusatzhandgriff über eine elastische Schlinge ist ein sehr einfacher Rückstellmechanismus für das Tastenelement geschaffen, mit dem das Tastenelement nach Betätigung stets in seine Ausgangsstellung zurückstellbar ist.

Dadurch, daß die als Feder dienende, elastische Schlinge vorgespannt über einen vorstehenden Finger des Tastenelements sowie einen dazu beabstandeten, gegenüberliegenden, vorstehenden Gegenfinger des Zusatzhandgriffs gehalten wird, ist sie besonders montagefreundlich angeordnet.

### Zeichnung

Ein Ausführungsbeispiel der Erfindung ist in der nachstehenden Beschreibung anhand der zugehörigen Zeichnung näher erläutert.

Es zeigen
Figur 1 eine Heckenschere mit Zusatzhandgriff,
Figur 2 einen Längsschnitt des Zusatzhandgriffs,
Figur 3 einen vergrößerten Ausschnitt aus Figur 2,
Figur 4 die Bewegungsübertragungmittel zwischen Seilzug und Totmannschalter bei nicht betätigtem Tastenelement,
Figur 5 die Bewegungsübertragungmittel gemäß Figur 4 bei betätigtem Tastenelement und
Figur 6 eine Ansicht der Stirnseite des Zylinder-Schlitzkopfes des Stößels.

### Beschreibung des Ausführungsbeispiels

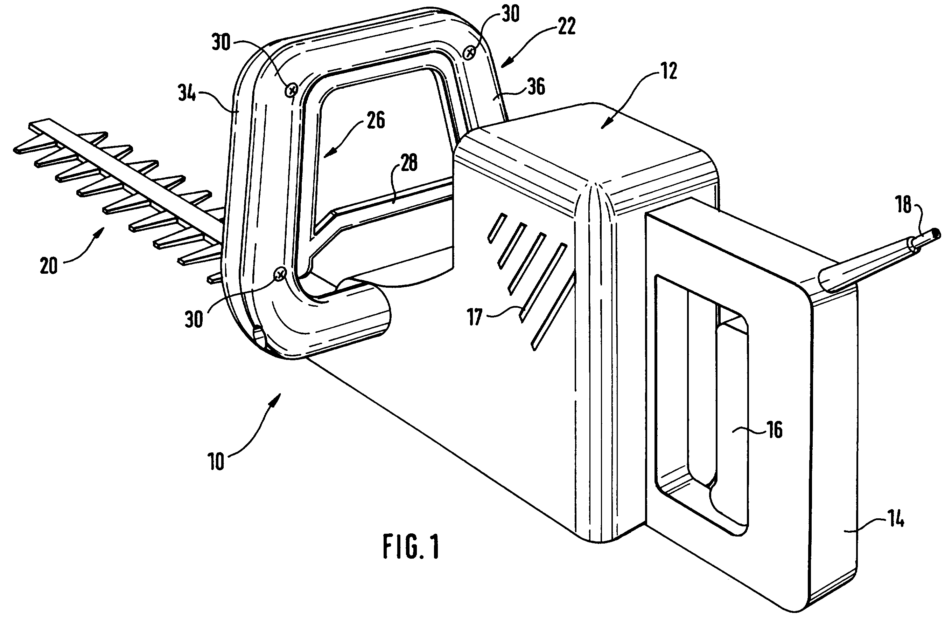

Die in Figur 1 räumlich dargestellte Heckenschere 10 weist ein zentrales Maschinengehäuse 12 auf, das - nichtdargestellt - einen Elektromotor sowie einen Antrieb für die Heckenscherenschneideinheit 20 bzw. die Heckenscherenmesser aufnimmt.

In Betrachtungsrichtung rechts, am hinteren Ende des Maschinengehäuses 12 ist ein auch als Spatengriff bezeichneter Handgriff 14 angeordnet, der eine Schalt-Taste 16 zum Betätigen eines Ein- und Aus-Schalters trägt. Das Maschinengehäuse 12 trägt seitlich Lüftungsschlitze 17 und aus dem hinteren Ende des Handgriffs 14 tritt ein Elektro-Kabel 18 aus. Vorn schließt sich am Maschinengehäuse 12 die Heckenscheren-Schneideinheit 20 mit nicht näher bezeichneten, hin- und hergehend geführten Heckenscherenmessern und Messerhaltern an.

Schräg nach vorn gerichtet tragt das Maschinengehäuse 12 oben einen Zusatzhandgriff 22, der innen hohl ist und der aus zwei Halbschalen 34, 36 mittels Schrauben 30 zusammensetzbar ist.

In seiner Innenkontur trägt der Zusatzhandgriff 22 ein Tastenelement 26 das im wesentlichen der Kontur des Zusatzhandgriffs 22 folgend U-förmig ausgebildet ist, verbunden durch einen Quersteg 28 im Bereich seiner Schenkelenden. Durch die Anordnung des Querstegs 28 wird das Tastenelement 26 erheblich versteift und der nicht dargestellte Schalter im Inneren des Maschinengehäuses 12 ist damit spielfrei betätigbar.

Zum Arbeiten mit der Heckenschere 10 umgreift der Bedienende mit seiner Haupthand den hinteren Handgriff 14 und mit der Führungshand den Zusatzhandgriff 22. Ist mit der Haupthand die Taste 16 und gleichzeitig mit der Führungshand das Tastenelement 26 betätigt, wird der Versorgungsstromkreis des nicht dargestellten Motors geschlossen, dieser in Gang gesetzt und die Heckenscherenmesser hin- und hergehend angetrieben.

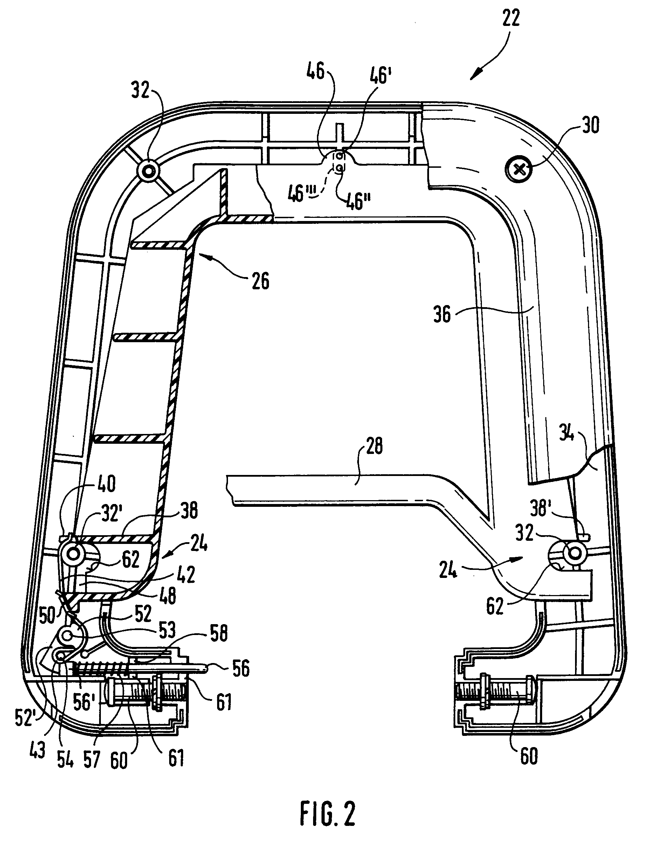

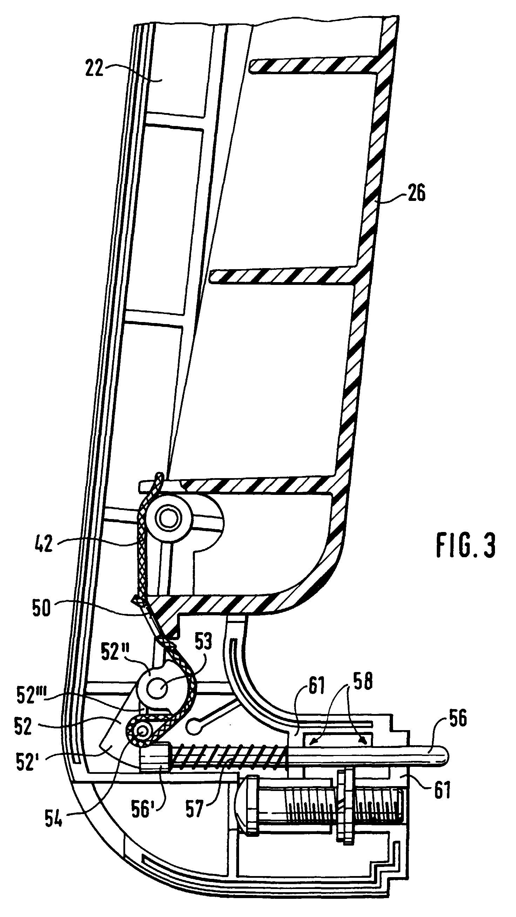

Der in den Figuren 2 und 3 dargestellte, teilweise aufgebrochene C-förmige Zusatzhandgriff 22 zeigt das A-förmige Tastenelement 26, eine eine untere und obere schalenartige Gehäusehälfte 34, 36 des Zusatzhandgriffs 22, dessen Innenumfang einen nicht näher erläuterten Schlitz trägt, der so bemessen ist, daß durch ihn das Tastenelement 26 ins Innere des Zusatzhandgriffs 22 verschiebbar hindurchtreten kann. Der Zusatzhandgriff 22 weist vier Schraubdome 32, 32' auf, in denen sich je eine Schraube 30 festhält, die die untere und die oberen Gehäusehälfte 34, 36 des Zusatzhandgriffs 22 zu einer Einheit zusammenfassen.

Das Tastenelement 26 ist ein mit vielen inneren Rippen versehener Hohlkörper. Dieser stützt sich im Bereich eines warzenartigen Zentrierdoms 46 über eine elastische Schlinge 46''' gegenüber dem Zusatzhandgriff 22 zentriert ab. Dazu ist die als Feder dienende, elastische Schlinge 46''' über einen vorstehenden Finger 46' des Tastenelements 26 sowie einen dazu beabstandeten, gegenüberliegenden, vorstehenden Gegenfinger 46'' der unteren Schale 34 des Zusatzhandgriffs 22 vorgespannt gehalten. Die Schlinge 46''' stellt das Tastenelement 26 nach Betätigung stets in seine Ausgangsstellung zurück.

In seinem unteren Schenkelbereich trägt das Tastenelement 26 in Betrachtungsrichtung links an einer vorstehenden Rippe 38, deren Ende zu einem Finger 40 ausgebildet ist, einen darüber unverlierbar geschlungenen Seilzug 42. Der Seilzug 42 führt nach links gewölbt über einen Schraubdom 32, an dem sich in neutraler Schaltposition das Tastenelement 26, beaufschlagt durch eine Feder 57, mit seiner Rippe 38 nach unten gezogen abstützt.

Der andere Schenkel des Tastenelements 26 trägt spiegelsymmetrisch zu dem die Rippe 38 tragenden Schenkel eine zweite Rippe 38', die sich auf gleiche Weise wie die Rippe 38 an einem weiteren Schraubdom 32 nach unten abstützt.

Der Seilzug 42 überspannt eine Ausnehmung 48 seitlich außen im unteren Bereich des Schenkels des Tastenelements 26 und liegt auf einer Führungsschräge 50 des Tastenelements 26 auf. In seinem weiteren Verlauf führt der Seilzug 42 nach rechts gewölbt um eine Kurvenscheibe 52 herum und von dieser weiter zu einer mit der Kurvenscheibe 52 verbundenen, stiftartigen Nase 54, die er mit einem schlingenartigen Ende 43 unverlierbar festhaltend umgreift.

Die Kurvenscheibe 52 ist mit einer Bohrung 53' um eine gehäusefeste Achse 53 drehbar gelagert und verringert die Reibung zwischen dem Seilzug 42 und dem Zusatzhandgriff 42 bei Betätigen des Seilzugs 42, weil sich der Seilzug 42 über die gewölbte Fläche der Kurvenscheibe abwälzen kann, wobei Rollreibung ohne Gleitreibung zwischen dem Seilzug 42 und der Kurvenscheibe 52 entsteht.

Die stiftartige Nase 54 ist an der Kurvenscheibe 52 in einem radialen Abstand von deren Mitte am Schwenkhebel 52' befestigt. Die Kurvenscheibe 52 greift mit einem Ende ihres Schwenkhebels 52' in ein gabelförmiges hinteres Ende eines in Nuten von Rippen 61 des Zusatzhandgriffs 22 geradgeführten Stößels 56. Dieser tritt bei Betätigen des Tastenelements 26 gemeinsam mit der Nase 54 und dem Schwenkhebel 52' in Betrachtungsrichtung nach rechts bzw. in das Innere des Maschinengehäuses 12, wo er einen nicht dargestellten Schalter, der als Totmannschalter fungiert, betätigt.

Zwischen der Nase 54 und dem sich um die Bohrung 53' erstreckenden Bund 52'' erstreckt sich eine Verstärkungrippe 52''', die die stiftartige Nase 54 über eine Teil iher Länge verformungssicher an der Kurvenscheibe 52 festhält.

Im unteren Bereich des linken Schenkels 24 des Zusatzhandgriffs 22 ist der Stößel 56 in der Längsführung 58 reibungsarm längsverschieblich gelagert, wobei er von eine Feder 57 umgriffen wird, die den Stößel 56 in Betrachtungsrichtung nach links zu drücken sucht, indem sie sich zwischen einem bundartigen und gabelförmigen Zylinderkopf 56' des Stößels 56 und zwei gehäusefesten Querrippen 61 abstützt, wobei die Bewegungsrichtung des Stößels 56 rechtwinklig zur Längserstreckung des Seilzugs 42 verläuft.

Durch die Vorspannkraft der Feder 57 wird der Stößel 56 gemeinsam mit der Kurvenscheibe 52, dem Seilzug 42 und dem Tastenelement 26 nach jedem Betätigen in eine neutrale Schaltposition zurückgestellt, in der der nichtdargestellte Totmannschalter den Betriebsstromkreis unterbricht.

Beide Schenkelenden 24 des Zusatzhandgriffs 22 werden von Befestigungsschrauben 60 durchtreten, die den Zusatzhandgriff 22 an das Maschinengehäuse 12 der Heckenschere 10 angeflanscht festhalten. Sowohl die untere als auch die obere Gehäusehälfte 34, 36 des Zusatzhandgriffs 22 sowie auch das Tastenelement 26 tragen zur Verbesserungs der Formsteifigkeit eine Vielzahl nicht gesondert aufgeführter Verstärkungsrippen.

Das Tastenelement 26 ist um den als Drehpunkt dienenden Schraubdom 32 schwenkbar und zugleich geradverschiebbar gelagert, wobei das Tastenelement 26 gegenüber dem als Anschlag dienenden Schraubdom 32' in der Mittelebene des Tastenelements 26 begrenzt frei verschiebbar gelagert ist. Dazu verhelfen die langloch- bzw. schlüssellochartigen Ausnehmungen 62 im unteren Schenkelbereich des Tastenelements 26, die die Schraübdome 32, 32' umgreifen bzw. sich zumindest in Neutralstellung des Tastenelements 26 daran abstützen und damit dem Tastenelement 26 gegenüber dem Zusatzhandgriff 22 die nötige Bewegungsfreiheit verschaffen.

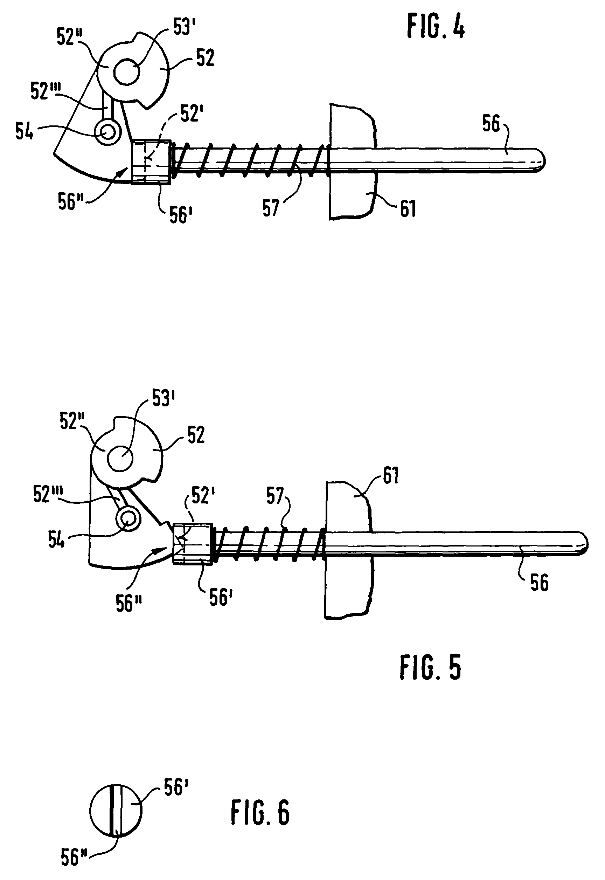

Die Figuren 4 und 5 zeigen die Kurvenscheibe 52 und den Stößel 56 einzeln in einer Explosiondarstellung, die die zu Figur 2 und 3 erwähnten Teile und Funktionselemente nochmals verdeutlichen. Dabei stellt Figur 4 die Neutralposition der Kurvenscheibe 52 und des Stößels 56 bei nichtbetätigtem Tastenelement 26 und die Figur 5 die ausgelenkte Position der Kurvenscheibe bei betätigtem Tastenelement 26 dar.

Die Betätigung des Totmannschalters über das Tastenelement 26 des Zusatzhandgriffs 22 erfolgt wie nachstehend beschrieben: Wird das Tastenelement 26 in Betrachtungsrichtung nach oben verschoben, wird die Feder 57 zusammengeschoben und der Seilzug 42 entlang seiner Längsachse gezogen, wobei er über die Wölbung des Doms 32 gleitet. Dabei zieht der Seilzug 42 die Nase 54 entgegen dem Uhrzeigersinn um die Achse 53 der Kurvenscheibe 54 gemeinsam mit dieser herum. Dabei schwenkt der Schwenkhebel 52' (Fig. 4, 5) den Stößel 56 nach rechts.

Da sich der Schwenkhebel 52' im stirnseitigen Schlitz 56'' des gabelförmigen Endes des Zylinderkopfs 56' des Stößels 56 gleitend abstützt, muß der Stößel 56 der Bewegung des Schwenkhebels 52' folgen. Die Materialauswahl für den Schwenkhebel 52' und den Zylinderkopf 56' ist so getroffen, daß deren Bewegungsübertragungsbereiche beim Ineinandergreifen und Gleiten nur minimale Reibung mit vernachlässigbarem Verschleiß erzeugen. Dadurch bilden die Kurvenscheibe 52 und der Stößel 56 eine besonders einfache, robuste und leichtgängie Kraftübertragungseinrichtung.

Wird das Tastenelement 26 nach Umgreifen des in Betrachtungsrichtung rechten Schenkels 24 des Zusatzhandgriffs 22 durch die Bedienhand nach rechts verschoben, wird der Seilzug 42 um bzw. über den Dom 32 gleitend nach rechts gezogen. Dies führt zu einer Längsbetätigung des Seilzugs 42, wobei ebenso wie bei der schon vorher beschriebenen Auslenkung mittels des Tastenelements 26 nach oben die Nase 54 um die Achse 53 herum bewegt wird und der Stößel 56 wiederum nach rechts bewegt wird.

Wird der in Betrachtungsrichtung linke Schenkel des Tastenelements 26 nach links verschoben, wird der Seilzug 42 mittels des Fingers 40 in Verbindung mit der Führungsschräge 50 weg vom Schraubdom 32 bewegt. Infolge dieser Bewegung wälzt sich der Seilzug 42 in Längsrichtung um die gewölbte Wälzfläche der Kurvenscheibe 52 herum ab und zieht diese an der stiftartigen Nase 54 um die Achse 53 herum entgegen dem Uhrzeigersinn. Dadurch wird der Stößel 56 wiederum nach rechts geradlinig mitgenommen.

In allen Betätigungsfällen sorgen die Ausnehmungen 62 im Bereich der Rippen 38 bzw. des Fingers 40 für eine Begrenzung des Betätigungshubs des Tastenelements 26, das dadurch auf einem sehr kurzen festlegbaren Betätigungsweg den Stößel 56 zum Auslösen des Totmann-Schalters bewegen kann. Außerdem stellt die, beispielsweise als Gummiring ausgestaltete elastische Schlinge 46''' nach dem Loslassen des Tastenelments 26 dieses in seine mittige Ausgangsstelung zurück und unterstützt damit eine feinfühlige Bedienbarkeit des Totmannschalters.

## Patentansprüche

1. Motorgetriebene Heckenschere (10) mit einem Maschinengehäuse (12), das einen Haupthandgriff (14) mit Schalttaste (16) sowie einen, insbesondere U- bzw. C-förmigen, hohlen Zusatzhandgriff (22) trägt, in dessen Innerem ein Seilzug (42) über ein vom Zusatzhandgriff (22) getragenes in dessen Inneres greifendes Tastenelement (26) auslenkbar auf einen Ein-/Ausschalter wirkend angeordnet ist, dadurch gekennzeichnet,
daß der Zusatzhandgriff (22) nur ein einziges Tastenelement (26) trägt, das gegenüber dem Zusatzhandgriff (22), insbesondere in alle Richtungen, radial nach außen bewegbar angeordnet ist und dabei den Seilzug (42) betätigend gegenüber dem Schalter mitnimmt, wobei der Seilzug (42), insbesondere ausschließlich, längsauslenkbar mit dem Tastenelement (26) gekoppelt ist.

2. Heckenschere nach Anspruch 1, dadurch gekennzeichnet, daß der Seilzug (42) über gewölbte Kurvenbahnen (32, 50, 52) geführt, insbesondere gespannt gehalten, wird.

3. Heckenschere nach Anspruch 2, dadurch gekennzeichnet, daß der Seilzug (42) sinusförmig über die gewölbten Kurvenbahnen (32, 50, 52) geführt verläuft.

4. Heckenschere nach Anspruch 3, dadurch gekennzeichnet daß der Seilzug (42) an einer drehbar gelagerten Kurvenscheibe (52) angreift und diese bei Betätigung des Tastenelements (26) verdreht.

5. Heckenschere nach Anspruch 4, dadurch gekennzeichnet, daß sich die Kurvenscheibe (52) mit einem Nockenbereich (52') an der Stirnseite (56'') eines Stößels (56), insbesondere in einen stirnseitigen Schlitz (56'') eintauchend, zur Kraftübertragung der über das Tastenelement (26) eingeleiteteten Bedienkraft abstützt.

6. Heckenschere nach Anspruch 5, dadurch gekennzeichnet, daß der Stößel (56), insbesondere zwischen ihn umgreifenden Rippen (61), im Zusatzhandgriff (22) längsverschiebbar geführt ist.

7. Heckenschere nach Anspruch 6, dadurch gekennzeichnet, daß der Stößel (56) entgegen seiner Betätigungsrichtung federvorgespannt gelagert ist.

8. Heckenschere nach Anspruch 6, dadurch gekennzeichnet, daß der Stößel (56) sich am Nockenbereich (52') der Kurvenscheibe (52) abstützt, den Seilzug (42) und das Tastenelement (26) entgegen der Betätigungsrichtung federvorgespannt hält.

9. Heckenschere nach Anspruch 1, dadurch gekennzeichnet, daß das Tastenelement (26) um einen, insbesondere als Schraubdom (32) ausgestalteteten und als Anschlag dienenden, Drehpunkt schwenkbar und zugleich gegenüber diesem Drehpunkt geradverschiebbar gelagert ist.

10. Heckenschere nach Anspruch 9, dadurch gekennzeichnet, daß das Tastenelement (26) gegenüber einem weiteren, insbesondere als Schraubdom (32') ausgestalteteten und als Anschlag dienenden, Punkt in der Mittelebene des Tastenelements (26) begrenzt frei verschiebbar gelagert ist.
